# EUROPEAN PATENT APPLICATION

(11) **EP 3 342 920 A1**
(43) Date of publication of application: **04.07.2018**
(21) Application number: 16840800.3
(22) Date of filing: 29.08.2016
(51) Int. Cl.: D06F 37/36, D06F 37/38, F16H 61/662, F16H 55/52

(54) **WASHING MACHINE**

(30) Priority: 28.08.2015 JP 2015168888
(71) Applicant: Qingdao Haier Washing Machine Co., Ltd., Shandong 266101 (CN); Aqua Co., Ltd, Chiyoda-ku Tokyo 100-0005 (JP)
(72) Inventor: ONISHI, Takashi, Tokyo 100-0005 (JP); BAMBA, Yoshikazu, Tokyo 100-0005 (JP); YONEZAWA, Takaaki, Tokyo 100-0005 (JP); KAWASHIMA, Satoru, Tokyo 100-0005 (JP)
(74) Representative: Tiburzi, Andrea
(86) International application number: PCT/CN2016/097135
(87) International publication number: WO 2017/036371

(57) **Abstract**

Disclosed is a washing machine which is properly treated noise and abnormal sound generated by a transmission when the transmission is introduced into the washing machine in order to efficiently use a motor. When the transmission (8) is introduced between an output shaft (72m) of the motor (72) and the input shaft (80m) of the rotation part (80), the transmission (8) includes: a variable driving side pulley unit (81) arranged on a side of the output shaft (72m); a variable driven side pulley unit (82) arranged on a side of the input shaft (80m); a driving belt (83) capable of transferring the power between the variable driving side pulley unit (81) and the variable driven side pulley unit (82); a rotating speed sensing part (81c) arranged in the driving side pulley unit (81) and configured to change a pulley diameter with the increase of rotating speed; and a torque cam mechanism (82f) arranged between pulley hubs (82d) and (82e) that form a movable pulley (82a) and a fixed pulley (82b) of the driven side pulley unit (82) and configured to control speed variation time when the pulley diameter varies in a reversing direction with the increase of the rotating speed via cam grooves (82f1) and pins (82f2). The cam grooves (82f1) of the torque cam mechanism (82f) adopt the following structure: the cam grooves each have a first guiding groove (82f11) which is inclined in one direction relative to a specific generatrix (C) on the pulley hub (82e) and a second guiding groove (82f12) which is inclined in the opposite direction relative to the generatrix (C). The pins (82f2) are guided into the first guiding groove (82f11) when the pulley unit (82) performs forward-rotation speed variation, and are guided into the second guiding groove (82f12) when the pulley unit (82) performs backward-rotation speed variation.

## Description

### TECHNICAL FIELD

The present invention relates to a washing machine into which a transmission can be introduced under an appropriate speed variation rule in order to efficiently apply a motor.

### BACKGROUND

In the past, a low price induction motor is frequently used in a washing machine. The induction motor is an alternating current (AC) motor. In the induction motor, induced current is generated in a rotating magnetic field established by coils through which alternating current flows, and supplied to a rotor side, so that the induction motor is driven by the interaction of the rotating magnetic field and a magnetic field generated by the induced current. In general, rotation power generated on an output shaft of such motor is transferred to input shafts of a rotation part such as an agitating wing, a dewatering drum and the like via a pair of pulleys and a driving belt and then via a decelerator (see patent document 1).

In another aspect, a variable frequency controlled member is also provided in the washing machine. The variable frequency control is such a control mode in which an alternating current is converted into a direct current, and then the direct current is converted into an alternating current of any frequency to drive the motor (see patent document 2).

However, in the mode of the induction motor, starting of the motor is slow and more actions are made in the low rotation region with low efficiency due to a fixed pulley diameter ratio. In addition, especially for a washing machine which implements a washing process and a rinsing process while switching rotation in a forward direction and a backward direction, a problem of poor efficiency cannot be solved due to low starting of the motor.

In another aspect, although the washing machine of the variable frequency control mode can be set at a frequency at which the washing machine operates at high efficiency, a price is relatively high on the whole due to a complex control system.

For solving such a problem, a solution can be considered to adopt a transmission. When the transmission is adopted, the induction motor can rapidly pass through a starting stage with low efficiency and transfer to a high rotation region with high efficiency.

In such the transmission, the transmission of a so-called V type driving belt frequently adopted in an electric vehicle and the like is relatively simple. This transmission is formed by connecting a driving side pulley unit and a driven side pulley unit through a driving belt. Moreover, the transmission can be installed in the washing machine as long as the driven side pulley unit and the driving side pulley unit are respectively installed on an input shaft used to supply rotation power for a rotation part for driving the washing machine and an output shaft which rotates in a forward direction and a backward direction and forms a power source of the rotation part.

However, since the washing machine acts repeatedly in the forward direction and the backward direction and a starting sequence of the motor is constant in each startup during the washing process and the rinsing process, it is different from a bicycle and the like which only rotates in one direction and variable speed of which is different due to the operation quantity of an accelerator.

### Related Technical Document

### Patent Document

Patent Document1: Japanese patent publication No. 2002-166089
Patent Document 2: Japanese patent publication No. 04-322696

### SUMMARY

### Problems to be solved by the invention

In view of such a situation, the present invention aims to provide a washing machine into which a transmission is introduced properly.

### Solution for solving the problems

To achieve the above-mentioned purpose, the present invention adopts the following solution.

Namely, the washing machine of the present invention includes: an input shaft configured to supply rotation power to a rotation part that rotates washings; a motor configured to rotate in a forward direction and a backward direction and served as a power source of the rotation part; and a transmission arranged between an output shaft of the motor and the input shaft of the rotation part. The transmission includes: a variable driving side pulley unit arranged on a side of the output shaft; a variable driven side pulley unit arranged on a side of the input shaft; a driving belt capable of transferring the power between the variable driving side pulley unit and the variable driven side pulley unit; a rotating speed sensing part arranged in the pulley unit on any side and configured to change a pulley diameter with the increase of rotating speed; and a torque cam mechanism arranged between pulley hubs that form a movable pulley and a fixed pulley of the pulley unit on any other side and configured to control speed variation time when the pulley diameter varies in a reversing direction with the increase of the rotating speed via cam grooves and driven members. The cam grooves of the torque cam mechanism each include: a first guiding groove having an inclined part which is inclined in one direction relative to a specific generatrix on the pulley hub equipped with the cam groove; and a second guiding groove having an inclined part which is inclined in a direction opposite to the direction of the first guiding groove relative to the generatrix, wherein the driven member is guided into the first guiding groove when the pulley unit performs forward-rotation speed variation, and is guided into the second guiding groove when the pulley unit performs backward-rotation speed variation.

The generatrix herein means a cylindrical line segment formed by that the generatrix rotates around an axis.

In view of a characteristic that the washing machine after being started repeatedly makes an action of increasing rotating speed according to a specified starting sequence in a forward direction and a backward direction, the cam grooves preferably each enable the first guiding groove and the second guiding groove to be communicated on a base end, and present a substantial V type which is diverged at an angle formed by the first guiding groove and the second guiding groove.

Or according to a situation that different characteristics are not required when the washing machine rotates in the forward direction and the backward direction, the first guiding groove and the second guiding groove are preferably formed in line symmetry relative to the generatrix of the pulley hub.

To correspond to a capacity difference of the washing machine properly, the washing machine preferably includes various cam grooves which include the first guiding groove and the second guiding groove, and which are configured in different positions along circumferential directions of the pulley hubs.

In this case, preferably, the various cam grooves have different groove widths; and corresponding driven members have different diameters.

### Effects of the invention

According to the present invention described above, since the torque cam mechanism can function properly in the forward direction and the backward direction, and the same driven member is continuously and reversely guided into the first cam groove and the second cam groove , no interference is generated in the forward direction and the backward direction. Thus, through a simple structure, desired speed variation can be performed according to the speed variation rule regardless of forward-rotation speed variation or backward-rotation speed variation.

According to the present invention that the cam grooves are designed into a substantial V type, the cam grooves can switch rotation in the forward direction and the backward direction smoothly, and fit in with an acceleration characteristic after the washing machine is started.

According to the present invention that the first guiding groove and the second guiding groove are formed in line symmetry relative to the generatrix, the output of the motor can be controlled evenly along the forward direction and the backward direction to implement washing and rinsing.

According to the present invention that the washing machine includes various cam grooves in the circumferential directions, since the cam grooves can be selected according to a specification of the washing machine, cost can be reduced through sharing of the pulley hubs.

In this case, according to the present invention that the cam grooves have different groove widths and the driven members have different diameters, for example, a structure that the driven members are thickened and the grooves are widened can be configured according to the capacity of the washing machine; and in addition, an assembly error that the driven members are inserted into the cam grooves of other specifications by mistake can be eliminated.

### BRIEF DESCRIPTION OF DRAWINGS

FIG. 1 is a local longitudinal sectional view illustrating a main part of a washing machine according to an embodiment of the present invention under a starting state of a transmission;
FIG. 2 is an overall sectional view illustrating an approximate structure of a washing machine without a transmission compared with the embodiment;
FIG. 3 is a description diagram illustrating a control system of a motor according to the embodiment;
FIG. 4 is a diagram illustrating a state after the transmission is started according to the embodiment;
FIG. 5 is a diagram illustrating a torque cam mechanism according to the embodiment;
FIG. 6 is a diagram illustrating an action when the torque cam mechanism rotates in a forward direction;
FIG. 7 is a diagram illustrating an action when the torque cam mechanism rotates in a backward direction;
FIG. 8 is a diagram illustrating a variation example of the torque cam mechanism;
FIG. 9 is a diagram illustrating another variation example of the torque cam mechanism; and
FIG. 10 is a diagram illustrating a still further variation example of the torque cam mechanism.

### List of reference numerals

8: transmission; 72: motor; 72m: output shaft; 80: rotation part; 80m: input shaft; 81: driving side pulley unit; 81c: rotating speed sensing part; 82: driven side pulley unit; 82d: pulley hub; 82e: pulley hub; 82f: torque cam mechanism; 82f1: cam groove; 82f2: driven member (pin); 83: driving belt; 182f1: cam groove; 282f1: cam groove; 382f1: cam groove; 482f1: cam groove; 582f1: cam groove; 682f1: cam groove; and C: generatrix.

### DETAILED DESCRIPTION

Embodiments of the present invention are described below with reference to drawings.

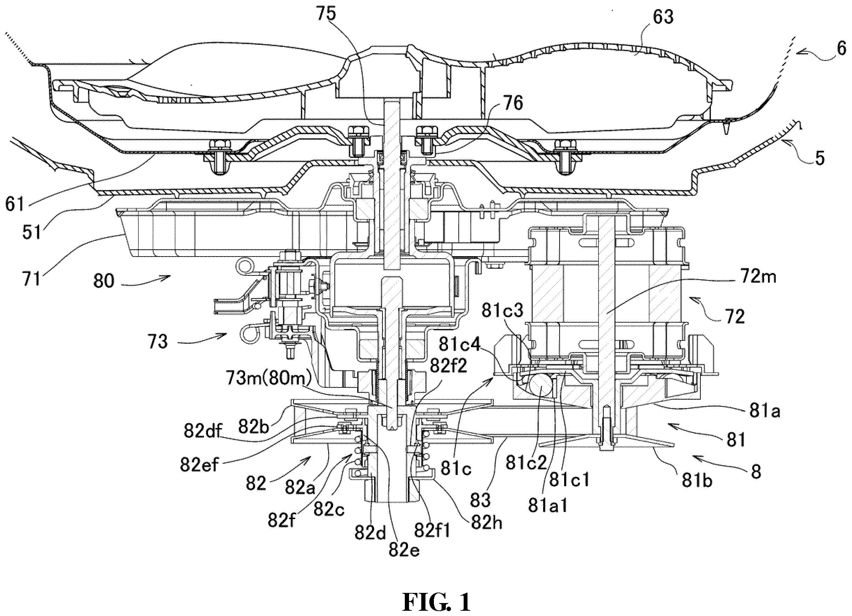

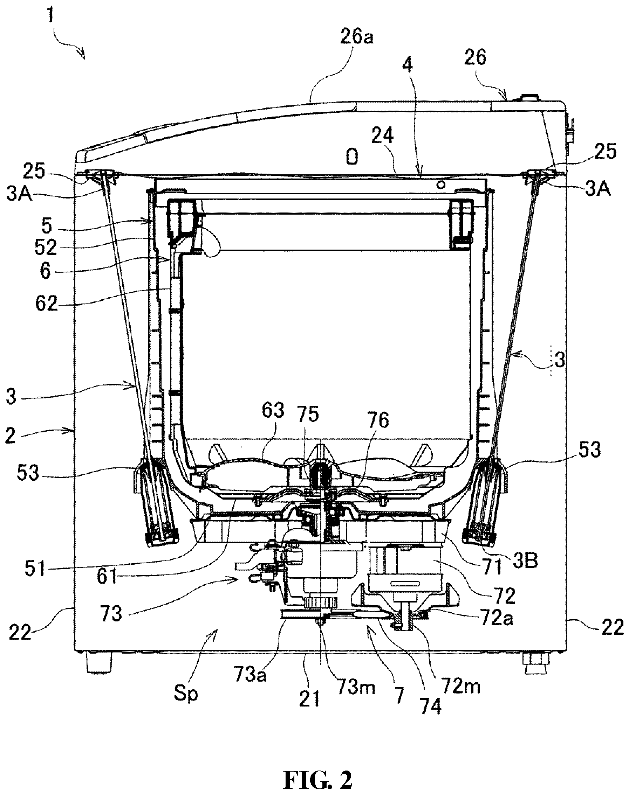

FIG. 1 is a local longitudinal sectional view illustrating a washing machine adopting a transmission 8 according to an embodiment. FIG. 2 is an overall longitudinal sectional view illustrating a washing machine 1 without such a transmission.

A basic structure of the washing machine 1 in FIG. 2 is firstly described. The washing machine equipped with the transmission of the present embodiment is described based on the washing machine 1.

The washing machine 1, which is a so-called vertical washing machine, includes a housing 2 and a washing drum unit 4 suspended and supported by a hoisting rod 3 inside the housing 2. The washing drum unit 4 includes: a substantially cylindrical bottomed outer drum 5, a substantially cylindrical bottomed inner drum 6 arranged coaxially with the outer drum 5 inside the outer drum 5, and a driving mechanism 7 arranged at a bottom of the outer drum 5.

The housing 2 is formed by a substantially-rectangular bottom surface 21 and four wall surfaces 22 which erect from the bottom surface 21, and presents a box shape having an inner space Sp with an upper opening. A suspending and fixing part 25 with hooked shape is arranged at each of four corners near an upper end 24 of the housing 2. The suspending and fixing part 25 serve as a fulcrum for suspending the hoisting rod 3 by fixing a base end 3A of the hoisting rod 3 in a suspended manner.

A cover 26 integrated with an operation panel is arranged at an upper part of the housing 2. A part of the cover 26 is configured as an opening/closing cover 26a through which the inner space Sp is opened and closed by an operation of a folding door.

The outer drum 5 of the washing drum unit 4 is a substantially cylindrical bottomed component, and includes: a bottom plate 51 forming the bottom and being substantially circular when observed from top; and a circumferential wall 52 which erects from an edge of the bottom plate 51. Suspended hooked supporting parts 53 are arranged integrally with a lower part of the circumferential wall 52 at four equally spaced positions when observed from top. The suspended supporting parts 53 can be used to install a top end 3B of the hoisting rod 3.

The inner drum 6 forms a so-called washing and dewatering drum configured to be a bottomed substantially cylindrical shape. The inner drum 6 includes: a bottom plate 61 served as a bottom and being substantially circular when observed from top; and a circumferential wall 62 which erects from an edge of the bottom plate 61. The inner drum 6 is arranged coaxially with the outer drum 5 inside the outer drum 5, and is rotatably supported by the outer drum 5 via the driving mechanism 7. A plurality of water through holes not shown, through which water in the inner drum 6 are discharged, are formed in the bottom plate 61 and the circumferential wall 62. In addition, an agitating wing 63 which is generally called as a pulsator is coaxially arranged directly above the bottom plate 61 of the inner drum 6.

The driving mechanism 7 includes a base component 71 installed on a lower surface of the bottom plate 51 of the outer drum 5, an induction motor 72 installed on the basal component 71, and a power distribution part 73 including a clutch. An output shaft 72m of the induction motor 72 and an input shaft 73m of the power distribution part 73 have a fixed pulley 72a and a fixed pulley 73, respectively. A flat driving belt 74 is wound around the fixed pulleys 72a, 73a to mutually transfer power.

The power distribution part 73 is configured to distribute, via the clutch, rotation power supplied to the input shaft 73a to two input shafts 75, 76 arranged coaxially. A first input shaft 75 on an inner side is connected with a center of the above agitating wing 63, and a second input shaft 76 on an outer side is connected with the bottom plate 61 of the inner drum 6. The power distribution part 73 supplys the rotation power of the induction motor 72 to the input shaft 73a through the fixed pulley 72a, the driving belt 74 and the fixed pulley 73a, and selectively switches the rotation power to the first input shaft 75 only or switches the rotation power to both of the first input shaft 75 and the second input shaft 76 according to an instruction from the control part. Thus, only the agitating wing 63 rotates in the washing machine 1 during a washing process and a rinsing process, while the inner drum 6 and the agitating wing 63 integrally rotate during dewatering.

In the present embodiment, in such a structure, a power transmission part between the output shaft 72m of the induction motor 72 and an input shaft 80m of a rotation part 80 (the input shaft 73m of the power distribution part 73) is provided with a transmission 8 shown in FIG. 1. Common components in FIG. 1 and FIG. 2 are marked with same reference numerals. The rotation part 80 of the present disclosure is equivalent to the agitating wing 63 in the washing and rinsing processes, and equivalent to the agitating wing 63 and the inner drum 6 in the dewatering process.

The transmission 8 is adopted to improve characteristics of the induction motor 72. For the induction motor 72, since a pulley diameter ratio of the fixed pulleys 72a and 73a is always constant and an effective torque first occurs only in the high rotation region, startup is slow and more actions occur in the low rotation region with large impact current. In addition, especially for the washing machine 1 which executes the washing process and the rinsing process while switching rotation in the forward direction and the backward direction, a poor starting characteristic may cause a great influence on the whole.

Therefore, the transmission 8 is provided to change the reduction ratio along with the startup. Moreover, even if the starting characteristics of the induction motor 72 are constant, the torque supplied to the input shaft 73m at the driven side is multiplied in the low-efficiency low rotation region of the induction motor 72 so that the low rotation region is rapidly passed through. As a result, through the torque multiplication, the cleaning power for the washings is increased after the startup, and then the induction motor 72 rapidly transfers to the high rotation region with high efficiency so as to achieve reduction of power consumption of the induction motor 72. Since the washing machine 1 repeatedly performs a special action of forward rotation/backward rotation within a short time, the above effect can be obtained repeatedly. Therefore, efficient operation achieved when a frequency converter is adopted can also be achieved even if a cheap structure adopting the induction motor 72 is used.

The transmission 8 is an automatic transmission that changes a speed ratio according to the rotating speed of the output shaft 72m of the induction motor 72. Specifically, the transmission 8 includes a variable driving side pulley unit 81 arranged on the output shaft 72m side, a variable driven side pulley unit 82 arranged on the input shaft 73m side, and a V type driving belt 83 for transferring the power between two pulley units 81, 82. The transmission 8 changes the pulley diameter ratio in a direction that the reduction ratio is reduced according to the rotating speed of the output shaft 72m. Compared with the power transmission part in FIG. 2 merely in terms of structures, the fixed pulley 72a, the flat driving belt 74 and the fixed pulley 73a are replaced by the driving side pulley unit 81, the driven side pulley unit 82 and the V type driving belt 83.

The driving side pulley unit 81 includes: a driving side movable pulley 81a, which is connected with the output shaft 72m of the induction motor 72 in such a way that the driving side movable pulley is rotatable together with the output shaft and is movable along an axial direction; a driving side fixed pulley 81b, which is fixed to the output shaft 72m in such a way that driving side fixed pulley is rotatable together with the output shaft and is unmovable along the axial direction, and which is opposite to the driving side movable pulley 81a; and a rotating speed sensing part 81c for exerting an axial displacement corresponding to the rotating speed of the output shaft 72m to the driving side movable pulley 81a.

Each of opposing surfaces of the driving side movable pulley 81a and the driving side fixed pulley 81b forms an inverted dish shape so that the distance between the opposing surfaces increases as the distance from the center in the radial direction increases.

The rotating speed sensing part 81c includes: a speed changing plate 81cl arranged at a position opposite to the driving side movable pulley 81a and having a supporting surface substantially orthogonal to the output shaft 72m; a counterweight roller 81c2, which is arranged as a movable counterweight between the speed changing plate 81cl and the driving side movable pulley 81a so that the weight roller 81c2 rotates along with the speed changing plate 81c1 and the driving side movable pulley 81a and is rotatable radially; an inclined surface 81c3 located at the driving side movable pulley 81a side and located at a position of adding the weight roller 81c2 and exerted with a force to the driving side fixed pulley 81b by the weight roller 81c2 as the weight roller 81c2 is away from the center; and an inclined surface 81c4 located at the speed changing plate 81c side and located at a position of adding the weight roller 81c2 and exerted with a force to the driving side fixed pulley 81b by the weight roller 81c2 as the weight roller 81c2 is away from the center. An inclination angle increases as the inclined surface 81c3 is away from the center. The inclined surface 81c4 of the speed changing plate 81cl and the inclined surface 81c3 of the driving side movable pulley 81a have opposite gradients.

In another aspect, the driven side pulley unit 82 includes: a driven side movable pulley 82a, which is connected with the input shaft 80m of the rotation part 80 (i.e., the input shaft 73m of the power distribution part 73) in such a way that the driving side movable pulley is rotatable together with the input shaft 80m of the rotation part 80 and is movable along the axial direction; a driven side fixed pulley 82b, which is fixed to the input shaft 73m in such a way that the driven side fixed pulley is rotatable together with the input shaft and is unmovable along the axial direction, and is opposite to the driven side movable pulley 82a; and a spring 82c for elastically exerting force to the driven side fixed pulley 82b from the driven side movable pulley 82a.

Each of opposing surfaces of the driven side movable pulley 82a and the driven side fixed pulley 82b also forms an inverted dish shape so that the distance between the opposing surfaces increases as the distance from the center in the radial direction increases.

In addition, the driven side pulley unit 82 further includes an inner side pulley hub 82d, an outer side pulley hub 82e, a cam mechanism 82f and the like.

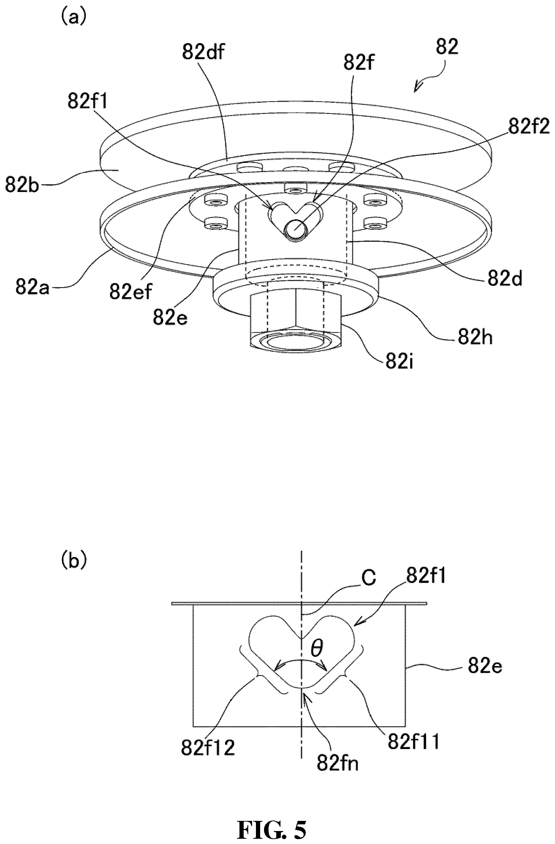

Specifically, as shown in FIG. 1 and FIG. 5(a), a flange 82df of the bottomed inner side pulley hub 82d is fixed to the driven side fixed pulley 82b; a flange 82ef of the outer side pulley hub 82e is fixed to the driven side movable pulley 82a; the inner side pulley hub 82d is embedded in the outer side pulley hub 82e ; and then a spring 82c (not shown in FIG. 5) and a driven pulley fixing plate 82h served as a spring base are engaged. In this state, a nut 82i is fastened to a shaft end of the inner side pulley hub 82d. The cam mechanism 82f is formed by fixing a pin 82f2, which is inserted into a cam groove 82f1 in the outer circumference of the outer side pulley hub 82e and serves as a driven member, to the outer circumference of the inner side pulley hub 82d.

The V type driving belt 83 is formed as a track shape using glass fiber, KEVLAR fiber and the like with good heat resistance and abrasion resistance, and is provided with a plurality of teeth in an inner circumference.

In addition, the torque cam mechanism 82f is a decisive mechanism in the speed variation rule in the transmission of a so-called V type driving belt widely adopted in an ordinary two-wheeled electric scooter and the like. The torque cam mechanism 82f realizes desired characteristics in acceleration, response during reacceleration and the like by changing inclination of the cam groove, and also becomes an important speed variation factor.

However, under a condition that such a transmission is newly introduced into the washing machine, especially in the washing process and the rinsing process, the washing machine acts repeatedly in the forward direction and the backward direction, and a starting sequence of the motor in each startup is constant. Therefore, the washing machine with the newly introduced transmission is different from the two-wheeled electric scooter and the like which only rotates in one direction and variable speed of which is different due to the operation quantity of an accelerator , and inclination of the cam groove in only one direction is not enough.

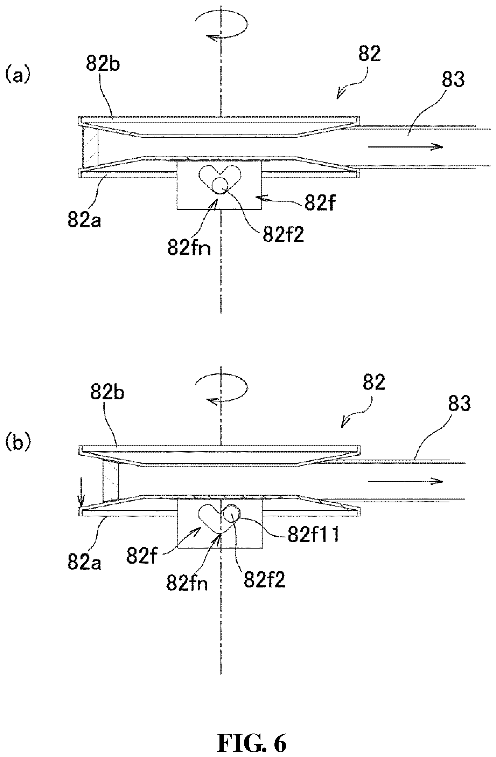

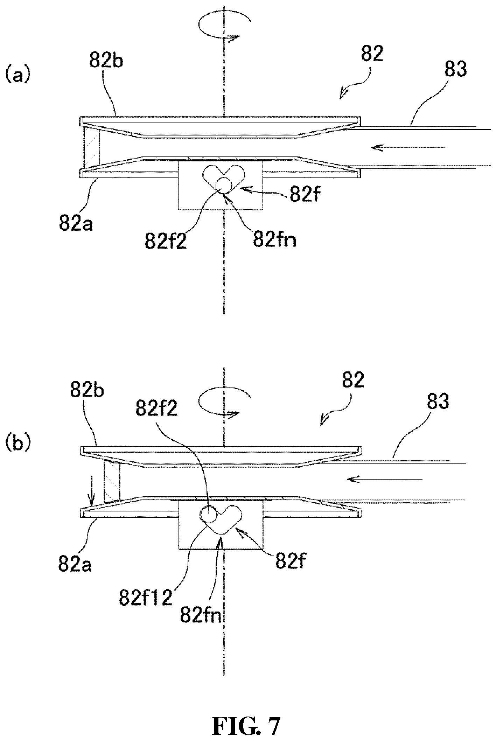

Therefore, based on this situation, in the present embodiment, the first guiding groove 82f11 and the second guiding groove 82f12 form the cam groove 82f1 of the torque cam mechanism 82f. As shown in FIG. 5(b), the first guiding groove 82f11 has an inclined part which is inclined at a fixed rising angle in one direction relative to a specific generatrix C on the pulley hub 82e equipped with the cam groove 82f1; the second guiding groove 82f12 has an inclined part which is inclined at a fixed rising angle in a direction opposite to the first guiding groove relative to the generatrix C; and the first guiding groove 82f11 and the second guiding groove 82f12 are communicated by a neutral point 82fn of a base end. Namely, the cam groove 82f1 presents an approximate V type which is diverged at an angle θ formed by the first guiding groove 82f11 and the second guiding groove 82f12, and is in line symmetry relative to the generatrix C. Moreover, under a condition that clockwise rotation of the pulley unit 82 when observed from top is set as forward rotation, the pin 82f2 as a driven member is guided into the first guiding groove 82f11 from the neutral point 82fn as shown in FIG. 6(a) to FIG. 6(b) when the pulley unit 82 performs forward-rotation speed variation, and is guided into the second guiding groove 82f12 from the neutral point 82fn as shown in FIG. 7(a) to FIG. 7(b) when the pulley unit 82 performs backward-rotation speed variation. Therefore, it can be realized that the torque cam mechanism 82f is not interfered and can properly work regardless of the rotation direction; and direction switching operation is smooth, and thus a steady speed variation in the forward direction and the backward direction can be realized according to a required speed variation rule regardless of the forward-rotation speed variation and the backward-rotation speed variation. It should be noted that a forward-rotation direction is not limited.

Although the pins 82f2 and the cam grooves 82f1 having the same shape are arranged in two opposite positions with an axis of the pulley hubs 82d and 82e to form the torque cam mechanism 82f in the present embodiment, the pins 82f2 and the cam grooves 82f1 can also be arranged in only one position or in more than three positions spaced equally to form the torque cam mechanism 82f. In addition, it does not take that the cam grooves are symmetry relative to the generatrix as a precondition.

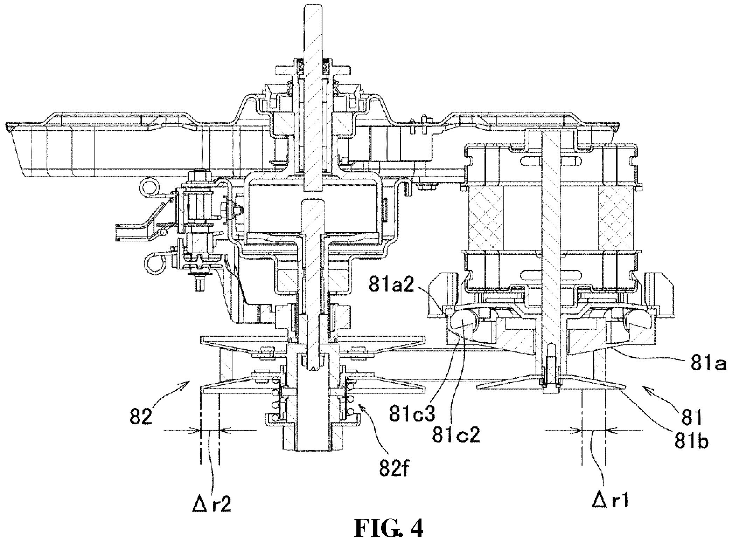

FIG. 1 illustrates a state before the motor is started. FIG. 4 illustrates a state after the motor is started. The driven side movable pulley 82a is originally in a state shown in FIG. 1 in which the driven side movable pulley 82a is applied with a force by the spring 82c and the distance of the driven side movable pulley relative to the driven side fixed pulley 82b is shortened; and the pulley diameter of the driven side pulley unit 82 clamped by the V type driving belt 83 is substantially increased. Since the opposite driving side movable pulley 81a does not exert centrifugal force, the weight roller 81c2 is located at a radial inner position near the output shaft 72m, the V type driving belt 83 is in a state of being pulled to the side of the driven side pulley unit 82 to increase the distance of the driving side movable pulley relative to the driving side fixed pulley 81b, and the pulley diameter of the driving side pulley unit 81 clamped by the V type driving belt 83 is substantially decreased.

When the motor 72 is started under the state, through the rotation of the driving side movable pulley 81a, the weight roller 81c2 moves to an outer circumferential side as shown in FIG. 1 to FIG. 4 due to the centrifugal force; and the driving side movable pulley 81a is pressed by the weight roller 81c2 via the inclined surface 81c3 and the inclined surface 81c4 so as to move toward the driving side fixed pulley 81b. As a result, the distance of the driving side movable pulley relative to the driving side fixed pulley 81b is decreased, so that the substantial pulley diameter of the driving side pulley unit 81 is increased by Δr1 relative to the V type driving belt 83. Next, the V type driving belt 83 is pulled to the driving side pulley unit 81 side, and the driven side movable pulley 82a resists elastic force of the spring 82c to move so that the distance of the driven side movable pulley relative to the driven side fixed pulley 82b is increased like FIG. 1 to FIG. 4. Therefore, the substantial pulley diameter is decreased by Δr2 relative to the V type driving belt 83.

A movable range of the weight roller 81c2 is set between an inner circumferential side vertical wall 81a1 and an outer circumferential side vertical wall 81a2 of the driving side movable pulley 81a. During this move, the pulley diameter ratio(i.e., the speed ratio) varies linearly when the torque cam mechanism 82f does not exist. However, by means of the torque cam mechanism 82f, for the variation of the pulley diameter of the driving side pulley unit 81, as shown in FIG. 6(a) to FIG. 6(b) and FIG. 7(a) to FIG. 7(b), the time for the variation of the pulley diameter of the driven side pulley unit 82 is adjusted to be the same approximately regardless of the rotation direction. As a result, speed variation is performed with an approximately the same speed variation rule regardless of the rotation direction.

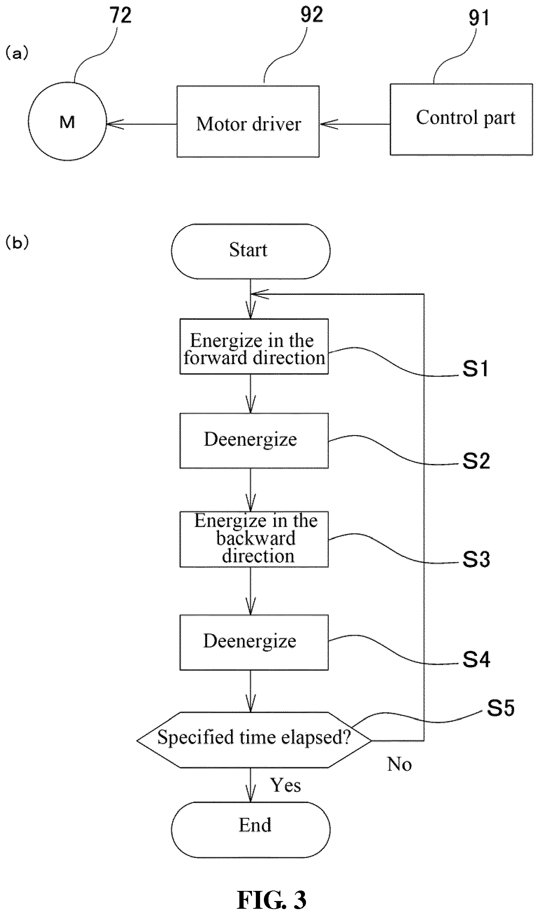

On the other hand, as shown in FIG. 3(a), the motor 72 is configured to be controlled by a control part 91 via a motor driver 92. The control part 91 is, for example, a microcomputer for controlling all washing programs of the washing machine 1, and controlling the energizing/deenergizing of the motor 72. FIG. 3(b) is a flow chart illustrating a summary of energizing control flow for the motor 72 in the washing process stored in the control part 91.

Firstly, the motor 72 is energized in the forward direction in step S1. After a specified driving time T1 elapsed since the energizing, the motor 72 is deenergized in step S2. Next, after a specified inertial rotation time T2 elapsed since the deenergizing, the motor 72 is energized in the backward direction in step S3. After a specified driving time T3 elapsed since the energizing, the motor 72 is deenergized in step S4. Then, after a specified inertial rotation time T4 elapsed since the deenergizing, the flow proceeds to step S5. In step S5, it is determined whether a specified process execution time T5 set for the washing process elapses since the washing process (i.e., since the energizing in initial step S1). If the determination result is "not", the flow returns to step S1; and if the determination result is "yes", the flow is ended.

In other words, the following control is performed: by taking the specified driving time T1 (T3) for driving the rotation part 80 and the specified inertial rotation time T2 (T4) until the rotation part 80 stops (i.e., until the agitating wing 63 stops) as working units, the reverse driving of the rotation part 80 is performed repeatedly on the basis of each working unit.

Thus, the pin 82f2 of the torque cam mechanism 82f always recovers to the neutral point 82fn of the cam groove 82f1 shown in FIG. 6(a) and FIG. 7(a) while stopping or starting reversing rotation; and the guiding grooves 82f11 and 82f12 shown in FIG. 6(b) and FIG. 7(b) alternately realize the specified speed variation rule while starting reversing rotation each time.

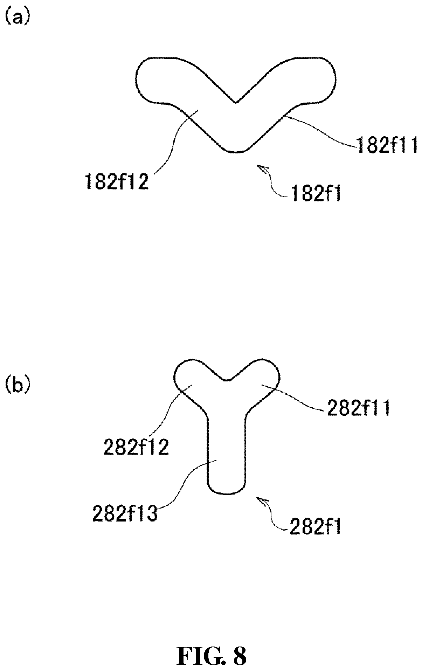

It should be noted that the guiding grooves 82f11 and 82f12 that form the cam groove 82f1 can be set as a proper shape according to a capacity of the washing machine, the characteristics of the motor, the setting of the washing/rinsing process and the like. For example, except the shape that the guiding grooves 82f11 and 82f12 extend according to an approximately constant rising angle as shown in FIG. 5(b) and the like, the following structures can be adopted: the cam groove 182f1 in which the guiding grooves 182f11 and 182f12 which are bent in the middle are combined as shown in FIG. 8(a); the cam groove 282f1 in which the local parts of guiding grooves 282f11 and 282f12 are continuously configured to be non-inclined parts 282f13 as shown in FIG. 8(b); the non-inclined parts are integrated to form a Y shape; and the guiding grooves are integrally bent, and the like (not shown).

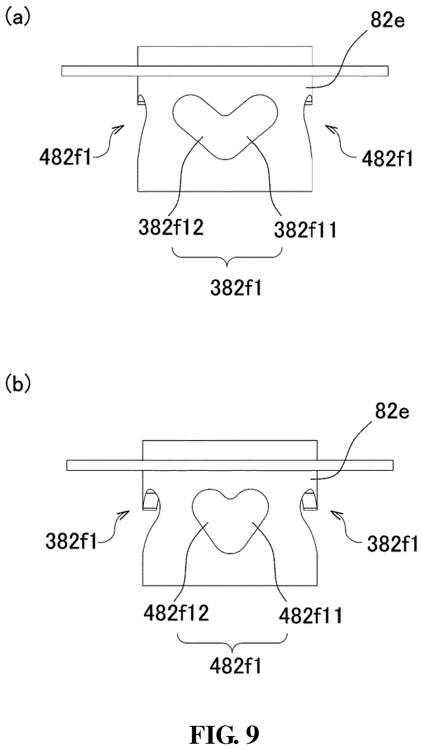

In addition, the capacities of the washing machine are different, including 5 kg, 10 kg and the like, and accordingly, speed variation rules are also different. Therefore, the following configuration manners are effective: as shown in FIG. 9(a) and FIG. 9(b), a first cam groove 382f1 including the first guiding groove 382f11 and the second guiding groove 382f12 is different from a second cam groove 482f1 including the first guiding groove 482f11 and the second guiding groove 482f12in different inclined angles and the like, and the first cam groove 382f1 and the second cam groove 482f1 are configured in different positions in the circumferential direction of the pulley hub 82e. In this way, since the pin can be assembled on a proper one of the cam grooves 382f1 and 482f1 selected according to the specification of the washing machine, cost can be reduced through sharing of the pulley hub 82e. Although the first cam grooves 382f1 and the second cam grooves 482f1 are configured in pairs in opposite positions with the axis in the figure, and are alternately arranged in positions spaced a phase of 90 degrees. Types and configuration manners are not limited and more than three cam grooves and the like can be configured in the circumferential direction.

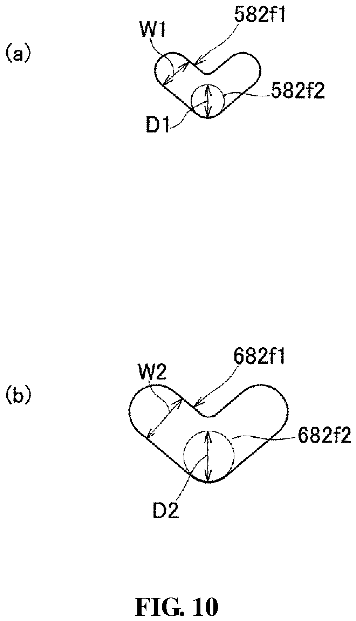

In this case, as shown in FIG. 10(a) and FIG. 10(b), for example, under a condition that a diameter of a pin 682f2 is widened to D2 from D1 relative to a diameter of a pin 582f2 as a driven member and the groove width of a cam groove 682f1 is widened to W2 from W1 relative to a groove width of a cam groove 582f1 according to the capacity of the washing machine, as long as the groove widths of a plurality of cam grooves are different and the diameters of the corresponding driven members are also different, an assembly error that the driven members are inserted into the cam grooves of other specifications by mistake can be eliminated.

Although embodiments of the present invention are described above, specific structures of all parts are not limited to the above-mentioned embodiments. Various variations can also be made without departing from the scope of the technical spirit of the present invention. For example, the driven members are designed to be other shapes other than the shapes of the pins.

## Claims

1. A washing machine, comprising: an input shaft configured to supply rotation power to a rotation part that rotates washings; a motor configured to rotate in a forward direction and a backward direction and served as a power source of the rotation part; and a transmission arranged between an output shaft of the motor and the input shaft of the rotation part,
wherein the transmission comprises: a variable driving side pulley unit arranged on a side of the output shaft; a variable driven side pulley unit arranged on a side of the input shaft; a driving belt capable of transferring the power between the variable driving side pulley unit and the variable driven side pulley unit; a rotating speed sensing part arranged in the pulley unit on any side and configured to change a pulley diameter with the increase of rotating speed; and a torque cam mechanism arranged between pulley hubs that form a movable pulley and a fixed pulley of the pulley unit on any other side and configured to control speed variation time when the pulley diameter varies in a reversing direction with the increase of the rotating speed via cam grooves and driven members;
the cam grooves of the torque cam mechanism each comprise a first guiding groove having an inclined part which is inclined in one direction relative to a specific generatrix on the pulley hub equipped with the cam groove; and a second guiding groove having an inclined part which is inclined in a direction opposite to the direction of the first guiding groove relative to the generatrix, wherein the driven member is guided into the first guiding groove when the pulley unit performs forward-rotation speed variation, and is guided into the second guiding groove when the pulley unit performs backward-rotation speed variation.

2. The washing machine according to claim 1, wherein
the cam grooves each enable the first guiding groove and the second guiding groove to be communicated on a base end, and present a substantial V type which is diverged at an angle formed by the first guiding groove and the second guiding groove.

3. The washing machine according to claim 1 or 2, wherein
the first guiding groove and the second guiding groove are formed in line symmetry relative to the generatrix of the pulley hub.

4. The washing machine according to claim 1 or 2, wherein
the washing machine comprises various cam grooves which comprise the first guiding groove and the second guiding groove, and which are configured in different positions along circumferential directions of the pulley hubs.

5. The washing machine according to claim 4, wherein
the various cam grooves have different groove widths; and corresponding driven members have different diameters.
